# EUROPÄISCHE PATENTSCHRIFT

(11) **EP 1 690 628 B1**
(45) Veröffentlichungstag und Bekanntmachung des Hinweises auf die Patenterteilung: **27.08.2008**
(21) Anmeldenummer: 06007067.9
(22) Anmeldetag: 17.11.2000
(51) Int. Cl.: B23K 20/12

(54) **Vorrichtung zum Verbinden von wenigstens zwei aneinanderliegenden Werkstücken nach der Methode des Reibschweissens**
Device for linking at least two adjoining work pieces by friction welding
Dispositif d'assemblage d'au moins deux pièces adjacentes selon le procédé de soudure par friction

(30) Priorität: 18.11.1999 DE 19955737
(43) Veröffentlichungstag der Anmeldung: 16.08.2006
(62) Teilanmeldung aus: 00987148.4
(73) Patentinhaber: GKSS-Forschungszentrum Geesthacht GmbH, 21502 Geesthacht (DE)
(72) Erfinder: Schilling, Christoph, 21483 Lütau (DE); dos Santos, Jorge F., Dr., 21395 Avendorf (DE)
(74) Vertreter: UEXKÜLL & STOLBERG

(56) Entgegenhaltungen:
- WO-A-98/04381
- US-A- 5 697 544

## Beschreibung

Die Erfindung betrifft ein Vorrichtung zum Verbinden von wenigstens zwei aneinanderliegenden Werkstücken nach der Methode des Reibschweißens, wobei die Werkstücke dabei einen Verbindungsbereich zwischen sich einschließen, mittels eines rotierend angetriebenen Reibschweißwerkzeugs , das bei seiner Rotation in Kontakt mit dem Verbindungsbereich der Werkstücke den Verbindungsbereich wenigstens teilweise plastifiziert, und eine Vorrichtung, mit der ein derartiges Verfahren ausgeführt werden kann (siehe WO-A-98/04 381).

Ein Verfahren und eine Vorrichtung ähnlicher Art sind bekannt (EP-B-0 615 480). Das Reibschweißen, vielfach auch FSW (Friction Stir Welding) genannt, ist vom Grundsatz her seit mehreren Jahren bekannt und ist immer weiterentwickelt worden. Ursprünglich wurde das Reibschweißen derart ausgeführt, daß zwei Werkstücke, die miteinander durch. Reibschweißung verbunden werden sollen, gegeneinander im gewünschten Verbindungsbereich bewegt werden und dabei mit einer voreinstellbaren Kraft gegeneinander gedrückt werden. Durch die durch die Reibung entstehende Wärme erfolgt letztlich eine Plastifizierung des Werkstoffs der Werkstücke in dem Verbindungsbereich. Ist der Werkstoff ausreichend plastifiziert, kann zumindest im- oberflächennahen Bereich der Verbindung eine ausreichende Durchmischung der Merkstoffe beider Werkstücke erfolgen, so daß bei Abkühlung die gewünschte Schweißverbindung zwischen beiden Werkstücken ausgebildet wird.

Bei dem eingangs genannten Verfahren bzw. der eingangs genannten Vorrichtung wird ein stiftartiger Vorsprung von einem Antrieb bzw. einem Motor in geeignet große Rotation versetzt, an den Stirnbereich zweier zu verbindender, nahezu stoßartig aneinander gelegter Werkstücke angesetzt und der stiftartige Vorsprung wird geeignet geführt, was beispielsweise mit einer speziellen Führuhgsvorrichtung oder auch mit einem Roboter geschehen kann, und zusätzlich beispielsweise in eine Translationsbewegung längs der Stoßkanten beider zu verbindender Werkstücke versetzt. Ist nach Beginn des Schweißvorganges durch die infolge der Rotation des stiftartigen Vorsprungs mit dem Werkstoff der Werkstücke der angrenzende Werkstoffbereich erzeugte Reibungswärme mit dem Werkstoff der Werkstoff ausreichend plastifiziert, wird unter Aufrechterhaltung der Rotationsbewegung des stiftartigen Vorsprungs die Translationsbewegung längs der Stoßkante zwischen den beiden Werkstücken ausgeführt, so daß beispielsweise eine Längsnaht ausgebildet wird.

Es ist bekannt, daß zum Verbinden zweier oder mehrerer metallischer Werkstücke sogenannte Punktschweißverbindungen hergestellt werden können, die vielfach gegenüber Niet- oder auch Schraubverbindungen den Vorteil haben, daß zur Ausbildung der Punktschweißverbindung keine zusätzlichen Verbindungselemente (Niete, Schrauben und dergleichen) verwendet werden müssen, und daß zudem die Punktschweißverbindung den Vorteil hat, daß die Ausbildung einer Punktschweißverbindung schneller vonstatten gehen kann, da keine die Niete bzw. die Schrauben aufnehmenden, die Werkstücke durchquerenden Bohrungen ausgebildet werden müssen, durch die die Niete bzw. die Schrauben hindurchgesteckt und dann durch die Ausbildung eines Nietkopfes bzw. das Verschrauben mit einer Mutter gegeneinander gedrückt bzw. miteinander verbunden werden müssen.

Während die Ausbildung einer Punktschweißverbindung zweier aneinanderliegender zu verbindender, werkstücke aus Eisen bzw. Stahl einschließlich seiner Legierungen mehr oder weniger unproblematisch mit handelsüblichen, eingeführten Punktschweißvorrichtungen durchzuführen möglich ist, ist die Ausbildung einer PunktscirwejBverbindung bei zwei oder mehreren aneinanderliegenden, zu verbindenden Werkstücken aus Aluminium bzw. Aluminiumlegierungen, wie sie beispielsweise im Flugzeugbau aber auch im Kraftfahrzeugbau Verwendung finden, bisher nach wie vor problematisch. Das hat seinen Grund darin, daß Aluminium bzw. Aluminiumlegierungen mit dem Sauerstoff der Umgebungsluft im Oberflächenbereich eine äußerst hinderliche Oxidschicht bildet, die einerseits einen beträchtlichen elektrischen Widerstand zwischen den zu verbindenden Werkstücken bildet und zudem in dem bei der Ausführung der Widerstandspunktschweißverbindungen entstehenden aufgeschmolzenen Schweißlinse enthalten 1st, so daß Störungen aus Aluminiumoxiden in den plastifizierten Bereich der zu verbindenden Werkstücke eingelagert sind. Das führt dazu, daß die an sich im Idealfall gute Punktschweißverbindungen herkömmlicher Art insbesondere bei zu verbindenden Werkstücken aus Aluminium nicht die Festigkeit zeigen, die in vielen Verbindungsfällen unbedingt erforderlich sind.

Aus diesem Grunde ist insbesondere im flugzeugbau, wo es bekanntermaßen auf allerhöchste Verbindungsgüten bei der Verbindung von Werkstücken ankommt, trotz vielfältiger Versuche und trotz des tatsächlich auch erfolgten Einsatzes von Punktschweißverbindungen herkömmlicher Art zur Ausbildung der erwähnten Nietverbindungen zwischen zu verbindenden Werkstücken zurückgegangen worden. Gleiches gilt sinngemäß auch für die Kraftfahrzeugindustrie, in der in zunehmendem Maße auch Aluminiumkonstruktionen im Chassis- und Karosseriebereich eingesetzt werden.

Es ist somit Aufgabe der vorliegenden Erfindung, eine Vorrichtung zu schaffen, mit der eine hochfeste und hochbelastbare Verbindung zwischen zu verbindenden metallischen und auch nichtmetallischen Werkstücken auf einfache Weise möglich ist, ohne daß zusätzliche Verbindungselemente zur Ausbildung der Verbindung benötigt werden, die mit hoher Präzision und reproduzierbar auf einfache Weise an die Menge der Werkstücke zur Ausbildung einer diese gemeinsam verbindenden Verbindung angepaßt werden können, die geeignet sind, werkstoffoxidfreie Verbindungen auszubilden und quasi eine ebene geschlossene Oberfläche auf beiden Seiten des Verbindungsortes nach Ausführung des Verbindungsvorganges gewährleisten können, wobei das Verfahren und die Vorrichtung einfach ausgeführt bzw. einfach realisiert werden können soll, und wobei das Verfahren und die Vor- Richtung auch zur Anwendung mit bzw. in Fertigungsrabotern geeignet sein sollen.

Gelöst wird die Aufgabe gemäß der Vorrichtung nach Anspruch 1.

Der Vorteil des erfindungsgemäßen Verfahrens besteht im wesentlichen darin, daß, anders als bei den bisherigen unterschiedlichen Verfahren zur Verbindung zweier oder mehrerer Werkstücke, keine Vorbereitung des Verbindungsortes erforderlich ist. Es müssen keine Löcher in den Werkstücken gebohrt werden, es sind keine zusätzlichen Verbindungsmittel erforderlich, es ist kein gesonderter Arbeitsvorgang, wie beispielsweise die Ausbildung eines Nietkopfes oder das Verschrauben einer Schraubverbindung mit einer Mutter und dergleichen, erforderlich, d.h. es entsteht, anders als beim Bolzenreibschweißen weder ein Wulst aus plastifiziertem Werkstoff sowie weder ein Loch noch eine Vertiefung, und es ist auch bei der Verwendung von Werkstücken aus Aluminium; Aluminiumlegierungen und sonstigen Leichtmetallen bzw. Legierungen, die erfindungsgemäß verbunden werden sollen, nur in sehr untergeordneter Form mit der Einbindung von geringen Oxidmengen zu rechnen, da der gesamte Verbindungsbereich aller zu verbindender Werkstücke plastifiziert und durchmischt wird, d.h. oberflächennahe Einbindungen von Oxidmengen, wie beim klassischen Punktschweißen, nicht auftreten können. Da sich der gesamte plastifizierte Werkstoff nach Ausführung eines bevorzugten Verbindungsvorganges wiederum in den im Zuge der Ausführung des Verfahrens in den Werkstücken gebildet habenden Loches im Verbindungsbereich in das Loch zurückgepreßt wird, Ist die Oberfläche auf der aktiven Seite, d.h. der Seite, die durch den stiftartigen Vorsprung beaufschlagt wird, völlig eben, wohingegen die Gegenseite, die durch das verfahrensmäßig letzte zu verbindende Werkstück gebildet wird, per se eben ist, da bei der Ausführung des Verfahrens diese nicht durchquert wird.

Die erfindungsgemäße Vorrichtung ist dadurch gekennzeichnet, daß als Relbschweiawerkzeug ein Hülsenelement vorgesehen ist, das durch die Achse angetrieben wird und bei seiner Rotation in Kontakt mit dem Verbindungsbereich des zum Hülsenelement gerichteten Werkstücks bringbar ist, wobei das Hülsenelement im wesentlichen längs seiner Drehachse durch den sich plastifizierenden Werkstoff wenigstens des ersten Werkstücks hindurch bis wenigstens teilweise in ein letztes unteres sich plastifizierendes Wericstück hinein bewegbar ist.

Bei dieser Lösungsweg der Vorrichtung kann afür bestimmte Anwendungsfälle durch das Hülsenelement als Reibschweißwerkzeug ein größerer Schweißpunktdurchmesser erreicht werden.

Vorteilhafterweise ist ein stiftartiger Vorsprung von dem mit diesem zusammen rotierend antreibbaren ersten Hülsenelement umgeben, wobei bei axialer Bewegung des Hülsenelements in die Werkstücke hinein bzw. durch diese hindurch der stiftartige Vorsprung eine Bewegung in entgegengesetzter axialer Richtung ausführt. Somit wird der durch die. Plastifizierung infolge des Eindringens des Hülsenelements in die Werkstücke hinein ausgeübte Bewegungsvorgang gezielt zur axialen Verschiebung der Stift in axial entgegengesetzter Richtung zur Eindringrichtung der Hülse in die Werkstücke hinein genutzt, wobei der Stift sich dann, wenn die gewünschte Tiefe des Schweißpunktes erreicht ist und die Hülse aus den Werkstücken herausgeleitet wird, in axial dazu entgegengesetzter Richtung wieder auf die Werkstücke zu bewegt, um den plastifizierten Werkstoff gezielt in den Plastifizierungsbereich der Werkstücke hineinzudrücken.

Bei der Lösung der erfindungsgemäßen Vorrichtung ist es vorteilhaft, daß das Hülsenelement in seinem Innenraum einen stiftartigen Vorsprung aufweißt, wobei bei axialer Bewegung des Hülsenelementes in die Werkstücke hinein bzw. durch diese hindurch der stiftartige Vorsprung eine Bewegung in entgegengesetzter axialer Richtung ausführt. Dabei gibt der stiftartige Vorsprung den Raum für den plastifizierten und verdrängten Werkstoff frei, was vorteilhaft im Zusammenhang mit der Ausbildbarkeit größerer Schweißpunktdurchmesser durch Verwendung des Hülsenelementes als Reibschweißwerkzeug ist.

Vorteilhafterweise ist der Betrag der axialen Bewegung des stiftartigen Vorsprungs und des ersten Hülsenelements derart gewählt, daß der Betrag im wesentlichen gleich ist, d.h., daß entsprechend der Angriffsfläche des stiftartigen Vorsprungs und des ersten Hülsenelements die verschobenen Werkstoffvolumina im wesentlichen gleich sind oder derart angepaßt, daß der plastifizierte Werkstoff während des gesamten Fügevorgangs unter einem gewissen hydrostatischen Druck gehalten wird, um insbesondere Zurückpressen des Werkstoffs eine optimale Anbindung an den Werkstoff der zu fügenden Werkstücke zu gewährleisten. Dadurch kann auf einfache Weise gewährleistet werden, daß tatsächlich -der gesamte plastif zierte Werkstoff nach Abschluß der Ausbildung der Verbindung wiederum in die Werkstücke bzw. in den Plastifizierungsbereich beider oder aller Werkstücke zurücküberfahrt wird.

Um dabei sicherzustellen, daß plastifizierter Werkstoff sowohl im Zuge des Eindringens der Hülse in die Werkstücke hinein als auch im Zuge der Bewegung des stiftartigen Vorsprungs aus den Werkstücken hinaus nicht unkontrolliert in den Umgebungsbereich der Vorrichtung abfließt, ist vorteilhafterweise die Hülse mit einem nicht rotierenden äußeren zweiten Hülsenelement umgeben, mit dem die Werkstücke zu Beginn der Ausführung des Verbindungsvorganges aneinander gedrückt werden. Dieses äußere zweite Hülsenelement hat somit einerseits die Aufgabe, die zu verbindenden Markstücke wenigstens im Bereich der auszubildenden Verbindung im Zusammenwirken mit einem Gegenlager aneinander zu drücken, so daß zunächst im Verbiridungsbereich der Werkstücke keine Spalten zwischen den Werkstücken vorhanden sind, und eine äußere Hülle zu bilden, die es dem plastifizierten Werkstoff im Zuge des Eindringens der Hülse in die Werkstücke und des Herausziehens des stiftartigen Vorsprungs aus den Werkstücken nicht ermöglicht, unkontrolliert zu den Seiten abzufließen.

Dabei wird vorteilhafterweise das erste Hülsenelement, das zusammen mit dem stiftartigen Vorsprung rotiert, in dem äußeren zweiten Hülsenelement geführt.

Grundsätzlich ist es möglich, die axiale Bewegbarkeit des stiftartigen Vorsprungs und die axiale Bewegbarkeit des ersten Hülsenelements in entgegengesetzter Richtung dazu durch äußere Mittel erfolgen zu lassen, beispielsweise durch einen geeignet ausgebildeten Arbeits- und Werkzeugkopf eines Fertigungsroboters. Um aber die Steuerungssequenzen eines Roboters oder einer sonstigen Einrichtung, mit der die erfindungsgemäße Vorrichtung betrieben wird, so weit wie möglich vom Fertigungsroboter bzw. von der Einrichtung fernzuhalten und ggf. schnell bei Betriebsstörungen die Vorrichtung gegen eine andere austauschen zu können, ohne eine Programmierung des Fertigungsroboters bzw. der Einrichtung vornehmen zu müssen, wird die Vorrichtung vorteilhafterweise derart ausgestaltet, daß die Steuerung der axialen Bewegbarkeit des stiftartigen Vorsprungs und die damit gekoppelte Steuerung der axialen Bewegbarkeit des ersten Hülsenelements in dazu entgegengesetzter Richtung durch als Wendelnuten in einem Stellringelement ausgebildete Kulissenführungen über darin hineingreifende Stellbolzen steuerbar ausgebildet, d.h. die axiale Bewegbarkeit des stiftartigen Vorsprungs und die damit gekoppelte axiale Bewegbarkeit des ersten Hülsenelements wird vorrichtungsintern realisiert.

Dazu ist vorteilhafterweise ein Gehäuse vorgesehen, in dem das Stellringelement mittels eines vom Gehäuseäußeren aus betätigbaren Handhebels drehbar aufgenommen wird.

Grundsätzlich kann der stiftartige Vorsprung in unmittelbarer axialer Verlängerung mit dem Ende einer Antriebsachse oder selbst auch noch als Antriebsachse ausgebildet sein, die beispielsweise in einen Roboter geeignet eingespannt wird. Da der stiftartige Vorsprung aber einer sehr großen mechanischen und thermischen Belastung bei der Ausführung einer Verbindung gemäß der, Erfindung ausgesetzt ist, ist es vorteilhaft, den stiftartigen Vorsprung als gesondertes Teil auszubilden, um diesen im Bedarfsfalle schnell 1 auswechseln zu können. Dazu ist vorteilhafterweise ein in der Vorrichtung rotierend aufgenommenes Stifthalteelement vorgesehen, mit dem der stiftförmige Vorsprung lösbar verbindbar und auch rotierend antreibbar ist.

Da zur Ausführung einer Verbindung gemäß der Erfindung mehrerer Werkstücke der stiftartige Vorsprung eine Bewegung in axialer Richtung auf die Werkstücke zu ausführen muß, müßte die Vorrichtung, wenn sie beispielsweise in einem Fertigungsroboter oder eine sonstige geeignete Einrichtung eingespannt ist, entsprechend der axialen Bewegung verschoben werden, wobei diese Verschiebung beispielsweise der Antriebskopf eines Fertigungsroboters ausführen müßte. Um den Roboter von dieser Bewegungssequenz in beiden axialen Richtungen zu befreien und diese Möglichkeit der Bewegung auf die Vorrichtung selbst zu verlagern, ist es vorteilhaft, in das Stifthalteelement ein Wellenelement in Rotationsrichtung fest aber axial verschiebbar eingreifen zu lassen.

Vorzugsweise ist der stiftartige Vorsprung im Querschnitt kreisförmig ausgebildet, d.h. er weißt eine im wesentlichen zylindrische Struktur auf. Es ist aber nicht zwingend, daß der stiftartige Vorsprung im Querschnitt kreisförmig ausgebildet is.t, d.h. grundsätzlich eine beliebige geeignete Querschnittsform aufweisen kann.

Ebenso ist das Hülsenelement vorzugsweise mit einem im Querschnitt kreisförmigen axialen Durchgangsloch versehen, in dem der stiftartige Vorsprung aufgenommen und geführt wird, wobei der stiftartige Vorsprung in diesem Zusammenhang auch nicht zwingend im Querschnitt kreisförmig ausgebildet sein muß, denn es würde genügen, daß die Querschnittsform des stiftartigen Vorsprungs derart gestaltet ist, daß eine drehsymmetrische Führung des stiftartigen Vorsprungs im Hülsenelement gewährleistet ist.

Schließlich kann es auch vorteilhaft sein, das Hülsenelement mit einem im Querschnitt nicht kreisförmigen axialen Durchgangsloch zu versehen, in dem der stiftartige Vorsprung aufgenommen und geführt wird. Dabei ist das Querschnittsprofil des stiftartigen Vorsprungs an das Querschnittsprofil des Durchgangslochs des Hülsenelements angepaßt, wobei grundsätzlich beliebige geeignete Querschnittsprofile sowohl des Durchgangslochs des Halsenelements als auch des stiftartigen Vorsprungs möglich sind.

Die Erfindung wird nun unter Bezugnahme auf die nachfolgenden schematischen Zeichnungen anhand eines Ausführungsbeispieles eingehend beschrieben. Darin zeigen:
- Fig. 1a. bis Fig. 1e.: im Schnitt den schematischen Aufbau eines Kopfes der Vorrichtung 10, umfassend einen stiftartigen Vorsprung, ein erstes und ein zweites Hülsenelement, zwei beispielhaft zu verbindende Werkstücke und in unterschiedlichen Schritten zur Ausbildung einer Verbindung zweier Werkstücke den sich durch Plastifizierung des Werkstoffs der Werkstücke bildenden Verbindungsbereich vom Beginn der Ausbildung der Verbindung an bis zu ihrem Abschluß und
- Fig. 2: in Form einer auseinandergezogenen Darstellung eine Vorrichtung gemäß der Erfindung in beispielhaft realisierter Form.

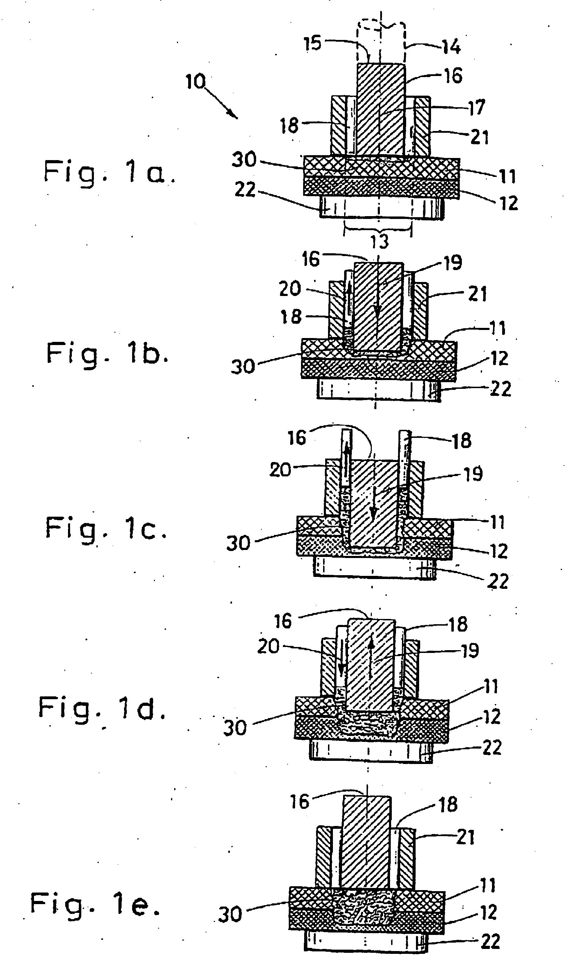

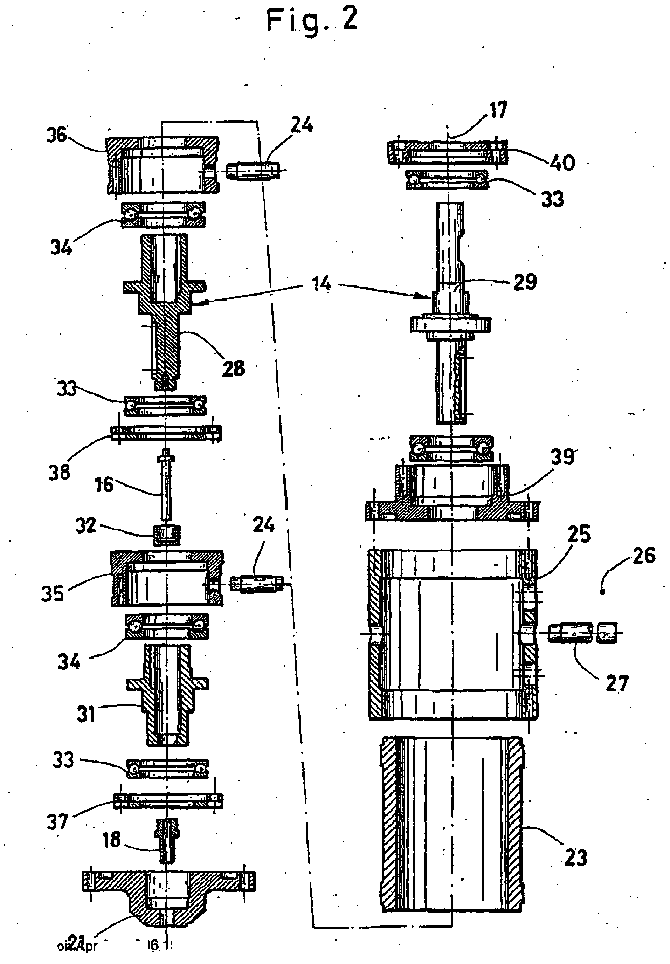

Es wird zunächst Bezug genommen auf Fig. 2, in der eine Vorrichtung 10, mit der auch das hier beschriebene Verfahren ausgeführt werden kann, In auseinandergezogener Darstellung dargestellt ist. Kernelemente der Vorrichtung 10 sind der stiftartige Vorsprung 16, das erste Hülsenelement 18, das zweite Hülsenelement 21 sowie die Antriebsachse 14, die hier aus dem Stifthalteelement 28 und dem Wellenelement 29 gebildet werden, vergleiche auch die entsprechenden Elemente in Fig. 1a. bis Fig. 1e.. Der stiftartige Vorsprung 16 und das erste Hülsenelement 18 können einen kreisförmigen Querschnitt aufweisen, sie können aber auch geeignet profiliert sein, so daß sich ein Transportkanal für den plastifizierten Werkstoff 30 ergibt. Der stiftartige Vorsprung 16, der im ersten Hülsenelement 18 aufgenommen wird, und das erste Hülsenelement 18 selbst werden im zweiten Hülsenelement 21, das hier in Form eines Gehäusebodens der Vorrichtung 10 ausgebildet ist, geführt.

Zur Übertragung axialer Kräfte wird das erste Hülsenelement 18 in einen Hülsenhalter 31 eingeschraubt. Der stiftartige Vorsprung 16 wird mit Hilfe einer Stiftmutter 32 am Stifthalteelement 28 befestigt. Der Hülsenhalter 31 mit dem ersten Hülsertelement 18 ist genau wie das Stifthalteelement 28 mit dem stiftartigen Vorsprung 16 drehbar gelagert. Der Hülsenhalter 31 und das Stifthalteelement 28 sind über Lager 33, 34 in Haltelagerträgern 35, 36 gelagert. Mittels Halteringen 37, 38 werden die Lagerpakete zusammengehalten. Die Haltelagerträger 35, 36 gleiten axial im. Stellring 23 und gewährleisten so die axiale Bewegung des ersten Hülsenelements 18 und des stiftartigen Vorsprungs 16. Die Haltelagerträger 35, 36 sind gegen ein Verdrehen gesichert. Dieses wird durch Stellbolzen 24, beispielsweise je drei, bewirkt, die durch das Stellringelement 23 hindurch (Durchbrüche hier nicht dargestellt) in im ringförmig ausgebildeten Gehäuse 25 Nuten (hier nicht dargestellt) greifen, die nur eine axiale Bewegung zulassen.

Das Stellringelement 23 ist drehbar im Gehäuse 25 gelagert. Axiale Bewegungen werden durch die Lagerung im als Gehäuseboden fungierenden zweiten Hülsenelement 21 und im als Gehäuseabschluß fungierenden Wellenlagerträger 39 unterbunden. Das Stellringelement 23 weist dort, wo die Stellbolzen 24 von den Haltelagerträgern 35, 36 zum Stellringelement 23 durchstoßen, Wendelnuten auf. Es ergibt sich somit eine Steigung der Wendel nuten gegenüber der Drehachse 17. Eine Verdrehung des Stellringelements 23 bewirkt eine axiale Bewegung des ersten Hülsenelements 18 und des stiftartigen Vorsprungs 16. Die Verdrehung wird aber einen Handhebel 27 von außen 26 erreicht, der in das Stellringelement 23 eingeschraubt wird. Der Handhebel 27 wird in einer am Umfang des Stellringelements geführten Nut (nicht dargestellt) geführt.

Das für den Betrieb der Vorrichtung 10 notwendige Drehelement wird über das einen Teil der Achse 14 bildende Wellenelement 29 eingeleitet, beispielsweise angetrieben durch einen hier nicht dargestellten Fertigungsroboter oder eine sonstige Antriebseinrichtung, und über eine Gleitfeder zum ebenfalls zur Antriebsachse 14 gehörigen Stifthalter 28 übertragen. Der Stifthalter 28 ist wiederum über eine Gleitfeder mit dem Hülsenhalter 31 verbunden. So kann das erforderliche Drehmoment zum stiftartigen Vorsprung 16 und zum ersten Hülsenelement 18 übertragen werden. Das wellenelement 29 ist im Wellenlagerträger 39 über die Lager 33, 34 gelagert. Eine Deckscheibe 40 sichert das Lagerpaket.

Das Wellenelement 29 besitzt an seiner einen Seite ein für eine Werkzeugaufnahme (Fertigungsroboter, Antriebseinrichtung) passendes Profil. Am Gehäuse 25 ist ein Haltehebel angebracht, über den das Mitdrehen der Vorrichtung 10 bei einer Einleitung eines Drehmoments in das Wellenelement verhindert wird.

Zur Ausführung des Verfahrens mit der vorbeschriebenen Vorrichtung 10, vergleiche auch die Fig. 1a. bis 1c., wird die Vorrichtung 10 mit ihrem. Wellenelement 29 in eine Werkzeugaufnahme einer Antriebseinheit (Fertigungsroboter, Antriebseinrichtung) eingeführt und fixiert. Unter der Vorrichtung 10.werden zwei Werkstücke 11, 12, beispielsweise in Form von Werkstücken aus Aluminium oder Aluminiumlegierungen, aufeinander fixiert. Dabei wird unter der Vorrichtung ein Gegenlager 22 postiert. Über die Antriebseinheit werden die drehenden Teile der Vorrichtung 10, nämlich das erste Hülsenelement 18 sowie der stiftartige Vorsprung 16, auf die für die Ausbildung einer- Punktschweißverbindung nötige Drehzahl gebracht. Die Vorrichtung 10 wird dabei mit dem Handhebel festgehalten, wobei diese Halterung natürlich auch durch das Antriebswerkzeug (Fertigungsroboter, Antriebseinrichtung) bewirkt werden kann. Zunächst wird das zweite Hülsenelemente 21, das den Gehäuseboden der Vorrichtung 10 darstellt, mit der Oberseite eines hier in den Fig. 1a. bis 1e. oben dargestellten Werkstücks 11 durch Zuführung der Vorrichtung 10 in Kontakt gebracht. Der Werkstoff des oberen Werkstücks 11 wird unter dem rotierenden stiftartigen Vorsprung 16 und zunächst auch dem rotierenden ersten Hülsenelement 18 plastifiziert.

Durch Betätigung des Handhebels 27, ggf, auch durch den Fertigungsroboter oder einer sonstigen Antriebseinrichtung, wird das Stellringelement 23 verdreht. Ober die erwähnten wendelnuten, die Stellbolzen 24 und den Haltelagerträger 35 wird das Stifthalteelement 28 mit dem stiftartigen Vorsprung 16 herunterbewegt entsprechend dem Pfeil 19. Der stiftartige Vorsprung 16 dringt in den Werkstoff ein, vergleiche Fig. 1b. Das erste Hülsenelement 18 wird aufgrund des vorbeschriebenen Mechanismusses entsprechend dem Pfeil 20 in entgegengesetzter axialer Richtung bewegt. Dazu sind auf vorbeschriebene Weise ausgebildete Wendelnuten, hier jedoch in entsprechend entgegengesetzter Richtung ausgebildet, vorgesehen. Das erste Hülsenelement 18 schafft aufgrund der entgegengesetzten axialen Bewegung 20 zur axialen Bewegung 19 des stiftartigen Vorsprunges 16 ein Raumvolumen, in den das durch den in die Werkstücke 11, 12 stiftartigen Vorsprung 16 erzeugte Volumen des plastifizierten Werkstoffs 30 eindringen kann. Ist die gewünschte axiale Eindringtiefe erreicht, vergleiche Fig. 1c., wird der Handhebel 27 zurückbewegt. Nun öffnet der sich in seine Ausgangsstellung zurückbewegende stiftartige Vorsprung 16 das Raumvolumen der Löcher in den Werkstücken 11, 12 für den durch das erste Hulsenalement 18 zurückgedrückten Werkstoff. Wenn der Handhebel 27 wieder in seiner Ausgangsstellung ist, kann die Vorrichtung 10 von den Werkstücken 11, 12 abgehoben werden.

Es, sei in diesem Zusammenhang noch darauf hingewiesen, daß im vorbeschriebenen Beispiel lediglich zwei Werkstücke 11, 12 vorgesehen sind, die mittels der erfindungsgemäßen Punktschweißverbindung miteinander verbunden werden sollen. Es ist mit der Vorrichtung 10 bzw. dem erfindungsgemäßen Verfahren ebenfalls möglich, mehr als zwei Werkstücke miteinander zu verbinden. Die Verfahrensführung ändert sich als solche dabei grundsätzlich nicht. Auch die Vorrichtung 10 behält dabei ihren vorbeschriebenen prinzipiellen Aufbau bei.

### Bezugszeichenliste

- 10: Vorrichtung
- 11: Werkstück
- 12: Werkstück
- 13: Verbindungsbereich
- 14: Achse
- 15: Ende (Achse)
- 16: stiftartiger Vorsprung
- 17: Drehachse
- 18: erstes Hülsenelement
- 19: axiale Bewegung (stiftartiger Vorsprung)
- 20.: entgegengesetzte axiale Bewegung (erstes Hülsenelement)
- 21: zweites Hülsenelement
- 22: Gegenlager
- 23: Stellringelement
- 24: Stellbolzen
- 25: Gehäuse
- 26: Gehäuseäußeres
- 27: Handhebel
- 28: Stifthalteelement
- 29: Wellenelement
- 30: plastifizierter Werkstoff
- 31: Hülsenhalter
- 32: Stiftmutter
- 33: Lager
- 34: Lager
- 35: Haltelagerträger
- 36: Haltelagerträger
- 37: Haltering
- 38: Haltering
- 39: Wellenträger
- 40: Deckscheibe

## Patentansprüche

1. Vorrichtung zum Verbinden von wenigstens zwei aneinanderliegenden Werkstücken nach der Methode des Reibschweißens, wobei die Werkstücke dabei einen Verbindungsbereich zwischen sich einschließen, umfassend eine rotierend antreibbare Achse, an der ein Reibschweißwerkzeug angeordnet ist,
**dadurch gekennzeichnet, daß** alls Reibschweißwerkzeug ein Hülsenelement (18) vorgesehen ist, das durch die Achse angetrieben wird und bei seiner Rotation in Kontakt mit dem Verbindungsbereich des zum Hülsenelement (18) gerichteten Werkstücks (11) bringbar ist, wobei das Hülsenelement (18) im wesentlichen längs seiner Drehachse (17) durch den sich plastizierenden Werkstoff wenigstens des ersten Werkstücks (11) hindurch bis wenigstens teilweise in ein letztes unteres sich plastizierendes Werkstück (12) hinein bewegbar ist.

2. Vorrichtung nach Anspruch 1, **dadurch gekennzeichnet, daß** das Hülsenelement (18) in seinem Innenraum einen stiftartigen Vorsprung (16) aufweist, wobei bei axialer Bewegung (19) des Hülsenelementes (18) in die Werkstücke (11) hinein bzw. durch diese hindurch der stiftartige Vorsprungs (16) eine Bewegung in entgegengesetzter axialer Richtung ausfuhrt.

3. Vorrichtung nach Anspruch 1 oder 2, **dadurch gekennzeichnet, daß** der Betrag der axialen Bewegung (19) des stiftartigen Vorsprungs (16) und des ersten Hülsenelements (18) im wesentlichen gleich ist.

4. Vorrichtung nach einem der Ansprüche 1 bis 3, **dadurch gekennzeichnet, daß** der stiftartige Vorsprung (16) von einem nicht rotierenden äußeren zweiten Hülsenelement (21) umgeben ist, mit dem die Werkstücke (11, 12) bei der Ausführung des Verbindungsvorganges gegeneinander drückbar sind.

5. Vorrichtung nach Anspruch 4, **dadurch gekennzeichnet, daß** das erste Hülsenelement (18) in dem äußeren zweiten Hülsenelement (21) geführt wird.

6. Vorrichtung nach einem der Ansprüche 1 bis 5, **dadurch gekennzeichnet, daß** die axiale Bewegbarkeit (19) des stiftartigen Vorsprungs (16) und die damit gekoppelte axiale Bewegbarkeit (20) des ersten Hülsenelements (18) in entgegengesetzter Richtung durch als Wendelnuten in einem Stellringelement (23) ausgebildete Kulissenführungen über darin hineingreifende Stellbolzen (24) steuerbar ist.

7. Vorrichtung nach Anspruch 6, **dadurch gekennzeichnet, daß** ein Gehäuse (25) vorgesehen ist, in dem das Stellringelement (23) mittels eines vom Gehäuseäußeren (26) aus betätigbaren Handhebels (27) drehbar aufgenommen wird.

8. Vorrichtung nach einem der Ansprüche 1 bis 7, **dadurch gekennzeichnet, daß** ein Stifthalteelement (28) vorgesehen ist, mit dem der stiftförmige Vorsprung (16) lösbar verbindbar und rotierend antreibbar ist.

9. Vorrichtung nach Anspruch 8, **dadurch gekennzeichnet, daß** in das Stifthalteelement (28) ein Wellenelement (29) in Rotationsrichtung fest aber axial verschiebbar eingreift.

10. Vorrichtung nach einem der Ansprüche 1 bis 9, **dadurch gekennzeichnet, daß** der stiftartige Vorsprung (16) im Querschnitt kreisförmig ausgebildet ist.

11. Vorrichtung nach einem der Ansprüche 1 bis 9, **dadurch gekennzeichnet, daß** der stiftartige Vorsprung (16) im Querschnitt nicht kreisförmig ausgebildet ist.

12. Vorrichtung nach einem der Ansprüche 1 bis 11, **dadurch gekennzeichnet, daß** das Hülsenelement (18) ein im Querschnitt kreisförmiges axiales Durchgangsloch aufweist, in dem der stiftartige Vorsprung (16) aufgenommen und geführt wird.

13. Vorrichtung nach einem der Ansprüche 1 bis 11, **dadurch gekennzeichnet, daß** das Hülsenelement (18) ein im Querschnitt nicht kreisförmiges axiales Durchgangsloch aufweist, im dem der stiftartige Vorsprung (16) aufgenommen und geführt wird.

## Claims

1. Device for connecting at least two adjacent workpieces according to the method of friction welding, wherein the workpieces enclose a joining area between them, comprising a rotary-driven axle, on which a friction welding tool is arranged, **characterised in that** a sleeve element (18) is provided as the friction welding tool, which is driven by the axle and upon its rotation can be brought into contact with the joining area of the workpiece (11) directed towards the sleeve element (18), wherein the sleeve element (18) can be moved essentially along its rotary axis (17) through the plasticising material at least of the first workpiece (11) at least partly into a last lower plasticising workpiece (12).

2. Device according to claim 1, **characterised in that** the sleeve element (18) in its interior has a pin-like projection (16), whereby upon the axial movement (19) of the sleeve element (18) into the workpieces or through the latter the pin-like projection (16) performs a movement in opposite axial direction.

3. Device according to claim 1 or 2, **characterised in that** the extent of the axial movement (19) of the pin-like projection (16) and the first sleeve element (18) is essentially the same.

4. Device according to one of claims 1 to 3, **characterised in that** the pin-like projection (16) is surrounded by a non-rotating outer second sleeve element (21), by means of which the workpieces (11, 12) can be pressed against one another when performing the connecting process.

5. Device according to claim 4, **characterised in that** the first sleeve element (18) is guided in the outer second sleeve element (21).

6. Device according to one of claims 1 to 5, **characterised in that** the axial mobility (19) of the pin-like projection (16) and the coupled axial mobility (20) of the first sleeve element (18) can be controlled in opposite direction by link guides in the form of helical grooves in an adjusting ring element (23) by means of adjusting bolts (24) engaging therein.

7. Device according to claim 6, **characterised in that** a housing (25) is provided, in which the adjusting ring element (23) is mounted rotatably by means of a hand lever (27) activated from the exterior of the housing (26).

8. Device according to one of claims 1 to 7, **characterised in that** a pin-holding element (28) is provided, by means of which the pin-like projection (16) can be connected detachably and driven in a rotating manner.

9. Device according to claim 8, **characterised in that** a shaft element (29) engages in a fixed but axially displaceable manner in rotational direction into the pin-holding element (28).

10. Device according to one of claims 1 to 9, **characterised in that** the pin-like projection (16) is designed to be circular in cross-section.

11. Device according to one of claims 1 to 9, **characterised in that** the pin-like projection (16) is designed to be non-circular in cross section.

12. Device according to one of claims 1 to 11, **characterised in that** the sleeve element (18) comprises an axial through hole with a circular cross-section, in which the pin-like projection (16) is mounted and guided.

13. Device according to one of claims 1 to 11, **characterised in that** the sleeve element (18) comprises an axial through hole which is not circular in cross-section, in which the pin-like projection (16) is mounted and guided.

## Revendications

1. Dispositif pour relier au moins deux pièces à travailler adjacentes selon la méthode du soudage par friction, les pièces à travailler enfermant une zone de jonction entre elles qui comprend un axe pouvant être entraîné en rotation sur lequel un outil de soudage par friction est placé,
**caractérisé en ce qu'**un élément à douille (18) est prévu comme outil de soudage par friction qui est entraîné par l'axe et qui, lors de sa rotation, peut être amené en contact avec la zone de jonction de la pièce à travailler (11) orientée vers l'élément à douille (18), l'élément à douille (18) étant mobile substantiellement le long de son axe de rotation (17) par la matière qui se plastifie de la première pièce à travailler (11) jusqu'au moins partiellement à l'intérieur d'une dernière pièce à travailler inférieure qui se plastifie (12).

2. Dispositif selon la revendication 1, **caractérisé en ce que** l'élément à douille (18) présente une saillie de type cheville (16) dans son espace intérieur, la saillie de type cheville (16) réalisant, lors d'un mouvement axial (19) de l'élément à douille (18) en entrant dans les pièces à travailler (11) ou en traversant celles-ci, un mouvement dans le sens axial inverse.

3. Dispositif selon la revendication 1 ou 2, **caractérisé en ce que** le montant du déplacement axial (19) de la saillie de type cheville (16) et du premier élément à douille (18) est substantiellement égal.

4. Dispositif selon l'une des revendications 1 à 3, **caractérisé en ce que** la saillie de type cheville (16) est entourée par un second élément à douille extérieur non rotatif (21) avec lequel les pièces à travailler (11, 12) peuvent être appuyées l'une contre l'autre lors de la réalisation de l'opération de jonction.

5. Dispositif selon la revendication 4, **caractérisé en ce que** le premier élément à douille (18) est guidé dans le second élément à douille extérieur (21).

6. Dispositif selon l'une des revendications 1 à 5, **caractérisé en ce que** la capacité de mobilité axiale (19) de la saillie de type cheville (16) et la capacité de mobilité axiale (20) couplée avec celle-ci du premier élément à douille (18) peut être commandée en sens inverse par des guides de coulisse configurés comme des gorges hélicoïdales dans un élément d'anneau de serrage (23) par l'intermédiaire de boulons d'arrêt (24) qui y pénètrent.

7. Dispositif selon la revendication 6, **caractérisé en ce qu'**il est prévu un boîtier (25) dans lequel l'élément d'anneau de serrage (23) est logé rotatif au moyen d'un levier à main (27) qui peut être actionné à partir de l'extérieur du boîtier (25).

8. Dispositif selon l'une des revendications 1 à 7, **caractérisé en ce qu'**il est prévu un élément de maintien de cheville (28) avec lequel la saillie en forme de cheville (16) peut être reliée de manière amovible et peut être entraînée en rotation.

9. Dispositif selon la revendication 8, **caractérisé en ce qu'**un élément à broche (2) s'engrène dans l'élément de maintien de cheville (28) fixe dans le sens de la rotation mais mobile axialement.

10. Dispositif selon l'une des revendications 1 à 9, **caractérisé en ce que** la saillie de type cheville (16) est configurée de section circulaire.

11. Dispositif selon l'une des revendications 1 à 9, **caractérisé en ce que** la saille de type cheville (16) est configurée de section non circulaire.

12. Dispositif selon l'une des revendications 1 à 11, **caractérisé en ce que** l'élément à douille (18) présente un trou de passage axial de section circulaire dans lequel la saillie de type cheville (16) est logée et guidée.

13. Dispositif selon l'une des revendications 1 à 11, **caractérisé en ce que** l'élément à douille (18) présente un trou de passage axial de section non circulaire dans lequel la saillie de type cheville (16) est logée et guidée.
